(19) **Europäisches Patentamt**

**European Patent Office**

**Office européen des brevets**

(11) **EP 1 050 138 B1**

(12) **EUROPEAN PATENT SPECIFICATION**

(45) Date of publication and mention
of the grant of the patent:
**15.03.2006 Bulletin 2006/11**

(51) Int Cl.:
***H04L 25/02*** (2006.01)

(21) Application number: **99905447.1**

(22) Date of filing: **20.01.1999**

(86) International application number:
**PCT/US1999/001219**

(87) International publication number:
**WO 1999/037067 (22.07.1999 Gazette 1999/29)**

(54) **CMOS DRIVER AND ON-CHIP TERMINATION FOR GIGABAUD SPEED DATA COMMUNICATION**

CMOS TREIBER UND ON-CHIP ABSCHLUSS FÜR GIGABAUD SCHNELLE
DATENKOMMUNIKATION

EXCITATEUR DE MOS COMPLEMENTAIRE ET TERMINAISON INCORPOREE POUR
COMMUNICATION DE DONNEES RAPIDE DE GIGABAUD

(84) Designated Contracting States:
**DE GB NL**

(30) Priority: **20.01.1998 US 71879**

(43) Date of publication of application:
**08.11.2000 Bulletin 2000/45**

(73) Proprietor: **Silicon Image, Inc.
Cupertino, CA 95014 (US)**

(72) Inventors:
• **AHN, Gijung
Mountain View, CA 94043 (US)**
• **JEONG, Deog-Kyoon
Sungnam-shi,
Kyungki-do (KR)**
• **KIM, Gyudong
Sunnyvale, CA 94086 (US)**

(74) Representative: **Liesegang, Eva
Forrester & Boehmert,
Pettenkoferstrasse 20-22
80336 München (DE)**

(56) References cited:
**WO-A-97/42731            WO-A-99/12306**

• **SVENSSON C ET AL: "High speed CMOS chip to
chip communication circuit" 1991 IEEE
INTERNATIONAL SYMPOSIUM ON CIRCUITS
AND SYSTEMS (CAT. NO.91CH3006-4),
SINGAPORE, 11-14 JUNE 1991, pages 2228-2231
vol.4, XP002104652 ISBN 0-7803-0050-5, 1991,
IEEE, New York, US**
• **GOGAERT S ET AL: "622 Mbit/s board-to-board
link in 0.5 mu m CMOS technology"
PROCEEDINGS OF THE IEEE 1995 CUSTOM
INTEGRATED CIRCUITS CONFERENCE (CAT.
NO.95CH35775), PROCEEDINGS OF THE IEEE
1995 CUSTOM INTEGRATED CIRCUITS
CONFERENCE, SANTA CLARA, CA, US, 1-4 MAY
1995, pages 447-450, XP002104653 ISBN
0-7803-2584-2, 1995, IEEE, New York, US**
• **GOGAERT S ET AL: "A 1 Gbit/s full-duplex CMOS
driver/receiver for twisted-pair
data-communication" 1998 SYMPOSIUM ON
VLSI CIRCUITS. DIGEST OF TECHNICAL
PAPERS (CAT. NO.98CH36215), 1998
SYMPOSIUM ON VLSI CIRCUITS DIGEST OF
TECHNICAL PAPERS, HONOLULU, HI, US, 11-13
JUNE 1998, pages 192-195, XP002104654 ISBN
0-7803-4766-8, 1998, IEEE, New York, US**

## Description

### CROSS-REFERENCE TO RELATED APPLICATIONS

The present application claims the benefit of U.S. provisional application serial number 60/071,879, titled "1.25 GBaud CMOS Driver and On-Chip Termination for Gigabit Ethernet PHY Chip," invented by Gijung Ahn, Deog-Kyoon Jeong, and Gyudong Kim, and filed on January 20, 1998. The present application is also related to U.S. patent application serial number 09/146,818, now US 6,229,859, titled "System and Method for High-Speed, Synchronized Data Communication," invented by Deog-Kyoon Jeong and Gijung Ahn, and filed on September 4, 1998.

### BACKGROUND OF THE INVENTION

#### Technical Field

This invention relates to data communication systems. More particularly, this invention relates high-speed communications systems including high-speed transmitters and receivers.

#### Description of Related Art

As electronic and computer technology continues to evolve, communication of information among different devices, either situated near by or at a distance becomes increasingly important. For example, it is now more desirable than ever to provide for high speed communications among different chips on a circuit board, different circuit boards in a system, and different systems with each other. It is also increasingly desirable to provide such communications at very high speeds, especially in view of the large amount of data required for data communications in intensive data consuming systems using graphical or video information, multiple input-output channels, local area networks, and the like.

In the document "High speed CMOS chip to chip communication circuit", from Christer Svensson et al., 1991, IEEE INTERNATIONAL SYMPOSIUM ON CIRCUITS AND SYSTEMS, SINGAPORE, 11-14 JUNE 1991, pages 2228-2231, vol. 4, a high speed CMOS speed driver for a binary serial data signal is described. This driver reaches a data rate of 700 Mbit/s which are driven on a 75 Ohm/line which can be terminated by off-chip or on-chip resistors.

The publication "622Mbit/s board-to-board link in 0,5 $\mu$m CMOS technology" from Gogaert et al., PROCEEDINGS OF THE IEEE 1995 CUSTOM INTEGRATED CIRCUITS CONFERENCE, SANTA CLARA, 1-4 MAY 1995, pages 447-450, another high speed digital processing chip is described. A chip comprises a driver for a symmetrical bi-level analog signal which is recovered and applied to a twin-ax shielded wire.

Document WO 97/42731 discloses a method and an apparatus for receiving a multi-channel digital signal which is synchronized in order to provide a parallel data signal. The apparatus and the method are particularly well-suited for the transmission of a video signal employing a composite RGB-signal made up of a signal for each of the red, green and blue signals used to compose the RGB-signal.

It is particularly desirable to enable individual personal computers, workstations, or other computing devices, within which data is normally internally transferred using parallel data buses, to communicate with each other over relatively simple transmission lines. Such transmission lines typically include only one or two conductors, in contrast with the 64-bit and wider data paths within computing systems now commonly available.

A communication system that includes oversampling is often utilized to recover transmitted data. Such a system includes a receiver which samples the incoming serial data stream at a rate greater than the rate at which symbols (bits) are being transmitted. For example, in a three-times (3x) oversampling receiver, the incoming data stream is sampled at a rate approximately three times the symbol rate. However, there are various problems to overcome in order to effectively implement such a receiver when the rate of data transmission is very high. For example, parasitic capacitance and inductance typically introduce substantial distortion into the received signal.

The physical layer of the Gigabit Ethernet standard (IEEE 802.3z) requires a so-called PHY chip which operates at gigabaud speeds. Traditionally, either GaAs or bipolar techniques have been used to implement such PHY chips. However, GaAs and bipolar circuits cannot be easily integrated with other CMOS (complementary metal-oxide-semiconductor) circuits and are typically more costly to manufacture than CMOS circuits.

### SUMMARY OF THE INVENTION

The above described needs are met and problems are solved by the present invention. New very high-speed CMOS techniques are used to achieve a CMOS driver operating at gigabaud speeds. Such a driver may be manufactured more easily than drivers that use GaAs or bipolar techniques and further may be easily integrated with other CMOS circuits. A communication system utilizing the gigabaud CMOS driver may additionally include a receiver with on-chip termination to significantly reduce distortion in the presence of parasitic capacitance in inductance in comparison to a receiver with external termination. Furthermore, the communication system may include a phase tracker and a frame aligner. The phase tracker continuously monitors the most frequent transition edges in the oversampled data so that the phase of the receiver clock keeps track of the sender clock. The frame aligner comprises a comma detector which enables instant synchronization of data words with a single comma character within a serial data stream.

BRIEF DESCRIPTION OF THE DRAWINGS

Fig. 1 shows a block diagram of a communication system utilizing a gigabaud CMOS driver in accordance with a preferred embodiment of the present invention.

Fig. 2 shows a circuit diagram of a high-speed serializer in accordance with a preferred embodiment of the present invention.

Fig. 3 shows a circuit diagram of a differential voltage driver in accordance with a preferred embodiment of the present invention.

Fig. 4 shows typical circuit configurations of (a) a current mode driver and (b) a voltage mode driver in accordance with a preferred embodiment of the present invention.

Fig. 5 shows simulated waveforms under the configurations shown in Fig. 4 in accordance with a preferred embodiment of the present invention.

Fig. 6 shows a circuit diagram of an on-chip termination circuit in accordance with a preferred embodiment of the present invention.

Fig. 7 shows the characteristics of the on-chip termination circuit shown in Fig. 6 for a 75 ohm transmission line in accordance with a preferred embodiment of the present invention.

Fig. 8 contrasts (a) a conventional receiver configuration using external termination outside the conventional receiver with (b) the receiver configuration which utilizes on-chip termination within the receiver in accordance with a preferred embodiment of the present invention.

Fig. 9 contrasts (a) a simulated waveform in a receiver using external termination in accordance with Fig. 8(a) with (b) a simulated waveform in a receiver utilizing on-chip termination in accordance with Fig. 8(b).

Fig. 10 shows a block diagram of (a) a phase tracker and (b) a frame aligner in accordance with a preferred embodiment of the present invention.

DESCRIPTION OF THE PREFERRED EMBODIMENTS

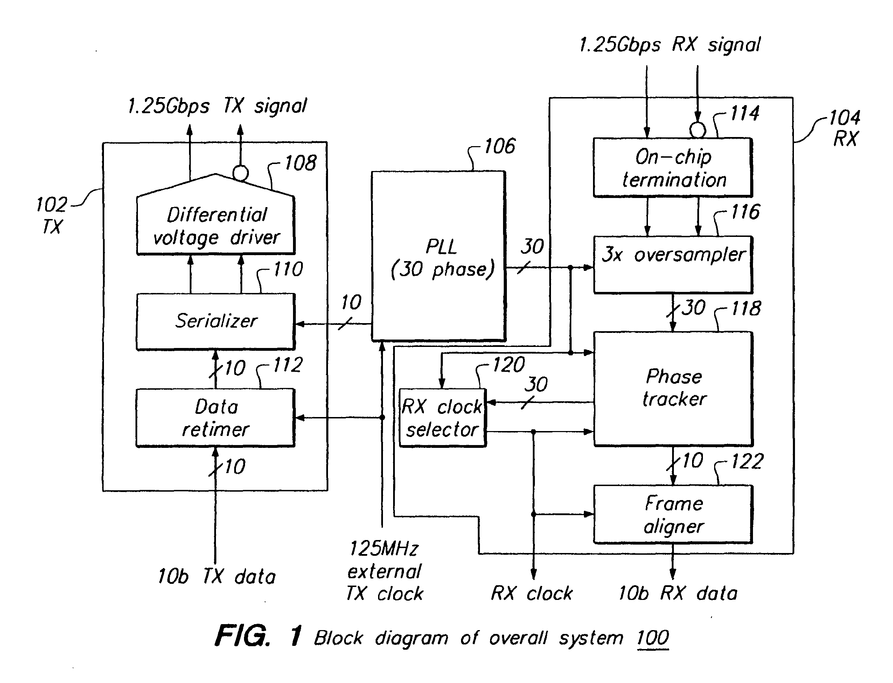

Fig. 1 shows a block diagram of a communication system 100 utilizing a gigabaud CMOS driver 108 in accordance with a preferred embodiment of the present invention. The system 100 includes a transmitter (TX) 102, a receiver (RX) 104, and a phase-locked loop (PLL) 106.

As shown in Fig.l, the transmitter 102 outputs a 1.25 gigabit per second (Gbps) signal to a transmission medium. Of course, the particular speed of the signal may vary within the scope of the present invention. The transmitter 102 includes a differential voltage driver (the gigabaud CMOS driver) 108, a serializer 110, and a data retimer 112.

In accordance with a preferred embodiment, the data retimer 112 receives a 125MHz external clock and a DC-balanced and limited run-length 10-bit parallel data stream from an encoder. The data retimer 112 utilizes the external clock to adjust the timing of the data stream.

The serializer 110 receives the adjusted 10-bit parallel data stream from the data retimer 112. The serializer 110 also receives 10 phase clocks from the PLL 106. The serializer 110 utilizes the 10 phase clocks to transform the 10-bit parallel data stream into a serial bit stream.

The differential voltage driver 108 receives the serial bit stream from the serializer 110. The differential voltage driver 108 drives the serial bit stream onto the medium at 1.25 Gbps, 10 times the 125 MHz speed of the external clock.

The transmission medium which carries the 1.25 Gbps signal is not terminated with a conventional external resistor. Instead, the transmission medium is terminated by an on-chip termination circuit 114 within the receiver 104. Use of the on-chip termination circuit 114 reduces signal distortion in comparison with external termination. The receiver 104 includes, in addition to the on-chip termination 114, a 3-times (3x) oversampler 116, a phase tracker 118, a RX clock selector 120, and a frame aligner 122.

The oversampler 116 receives the data signal from the on-chip termination 114. The oversampler 116 utilizes 30 phase clocks supplied by the PLL 106 to oversample the data signal and generate 30 sampled bits in parallel. The 3x oversampler 116 provides the 30 sampled bits in parallel to the phase tracker 118. The phase tracker 118 and the RX clock selector 120 operate to recover the clock and the data from the oversampled data and provides the recovered data stream to the frame aligner 122. In a preferred embodiment, the frame aligner 122 searches for a comma character in the recovered data stream and makes a near instant alignment of the boundary between words when such a comma character is found.

In accordance with a preferred embodiment of the system 100, a clock frequency difference between the TX 102 and the RX 104 of less than 0.1% is to be tolerated. The PLL 106 operates to keep the clock frequency difference within that tolerance.

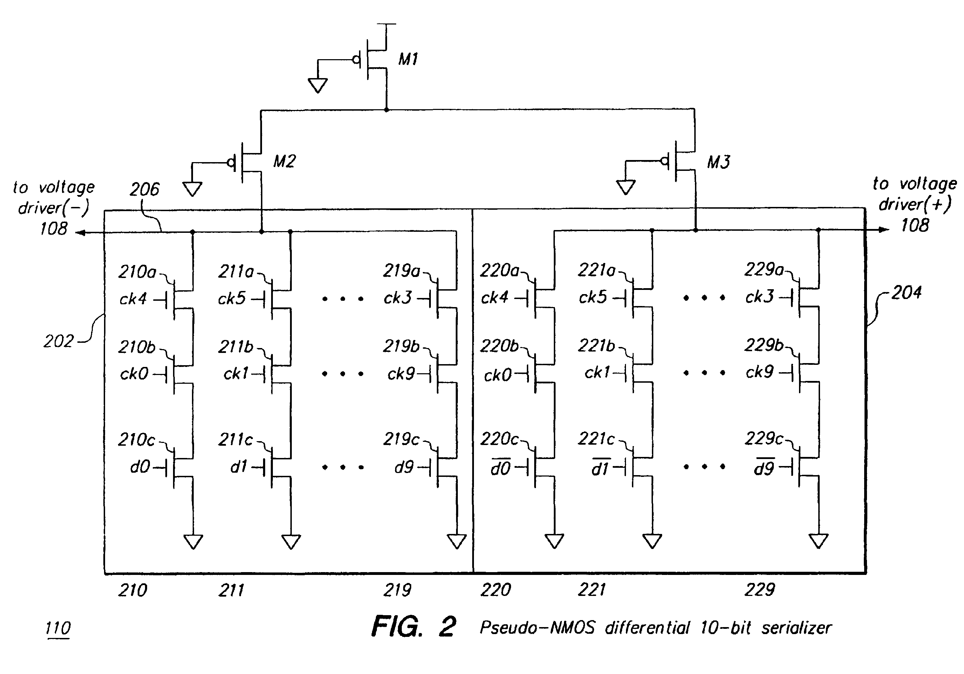

Fig. 2 shows a circuit diagram of a high-speed serializer 110 in accordance with a preferred embodiment of the present invention. The serializer 110 comprises NMOS (n-type metal-oxide-semiconductor) transistors used as switching elements, and PMOS (p-type metal-oxide-semiconductor) transistors (M1, M2, M3) used as loads. These transistors are used to form differential pseudo-NMOS logic.

Regarding the PMOS transistors, M1 has its source coupled to a supply voltage, its gate coupled to an electrical ground, and its drain coupled to the sources of M2 and M3. Operationally, M1 pulls down the common mode voltage so that the output voltage moves around one-half the supply voltage (Vdd/2) with a small swing. M2 has its gate coupled to an electrical ground, and its drain coupled to a first NMOS transistor network 202. M3 has its gate coupled to an electrical ground, and its drain coupled to a second NMOS transistor network 204.

The first network 202 includes a first node 206 coupled to the drain of M2. The first node 206 is also coupled to the negative input terminal of the differential voltage driver 108. In addition, the first node 206 is coupled to ten columns (210, 211, ..., 219) of NMOS transistors. Each column 210-219 includes three NMOS transistors in series between the first node 206 and electrical ground. For example, the first column 210 includes a first NMOS transistor 210a whose source is coupled to the first node 206, a second NMOS transistor 210b whose source is coupled to the drain of the first NMOS transistor 210a, and a third NMOS transistor 210c whose source is coupled to the drain of the second NMOS transistor 210b and whose drain is coupled to an electrical ground. The gate of the first NMOS transistor 210a is coupled to receive a fifth phase clock signal (ck4) from the PLL 106. The gate of the second NMOS transistor 210b is coupled to receive a first phase clock signal (ck0) from the PLL 106. Finally, the gate of the third NMOS transistor 210c is coupled to receive a first data signal (d0) from the data retimer 112.

Similarly, the second column 211 includes three NMOS transistors (211a-211c) coupled in series between the first node 206 and an electrical ground. The gate of the first NMOS transistor 211a is coupled to receive a sixth phase clock signal (ck5) from the PLL 106. The gate of the second NMOS transistor 211b is coupled to receive a second phase clock signal (ck1) from the PLL 106. Finally, the gate of the third NMOS transistor 211c is coupled to receive a second data signal (d1) from the data retimer 112.

And so on for the other columns 212-219, incrementing the signals on the gates appropriately. For example, regarding the tenth column 219, the gate of the first NMOS transistor 219a is coupled to receive a fourth phase clock signal (ck3) from the PLL 106. The gate of the second NMOS transistor 219b is coupled to receive a tenth phase clock signal (ck9) from the PLL 106. Finally, the gate of the third NMOS transistor 219c is coupled to receive a tenth data signal (d9) from the data retimer 112.

The second network 204 includes a second node 208 coupled to the drain of M3. The second node 208 is also coupled to the positive input terminal of the differential voltage driver 108. In addition, the second node 208 is coupled to ten columns (220, 221, ..., 229) of NMOS transistors. Each column 220-229 includes three NMOS transistors in series between the second node 208 and electrical ground.. For example, the first column 220 includes a first NMOS transistor 220a whose source is coupled to the second node 208, a second NMOS transistor 220b whose source is coupled to the drain of the first NMOS transistor 220a, and a third NMOS transistor 220c whose source is coupled to the drain of the second NMOS transistor 220b and whose drain is coupled to an electrical ground. The gate of the first NMOS transistor 220a is coupled to receive a fifth phase clock signal (ck4) from the PLL 106. The gate of the second NMOS transistor 220b is coupled to receive the first phase clock signal (ck0) from the PLL 106. Finally, the gate of the third NMOS transistor 220c is coupled to receive an inverted version of the first data signal (inverted d0) from the data retimer 112.

Similarly, the second column 221 includes three NMOS transistors (221a-221c) coupled in series between the second node 208 and an electrical ground. The gate of the first NMOS transistor 221a is coupled to receive a sixth phase clock signal (ck5) from the PLL 106. The gate of the second NMOS transistor 221b is coupled to receive a second phase clock signal (ck1) from the PLL 106. Finally, the gate of the third NMOS transistor 221c is coupled to receive an inverted version of the second data signal (inverted d1) from the data retimer 112.

And so on for the other columns 222-229, incrementing the signals on the gates appropriately. For example, regarding the tenth column 229, the gate of the first NMOS transistor 229a is coupled to receive a fourth phase clock signal (ck3) from the PLL 106. The gate of the second NMOS transistor 229b is coupled to receive a tenth phase clock signal (ck9) from the PLL 106. Finally, the gate of the third NMOS transistor 229c is coupled to receive an inverted version of the tenth data signal (d9) from the data retimer 112.

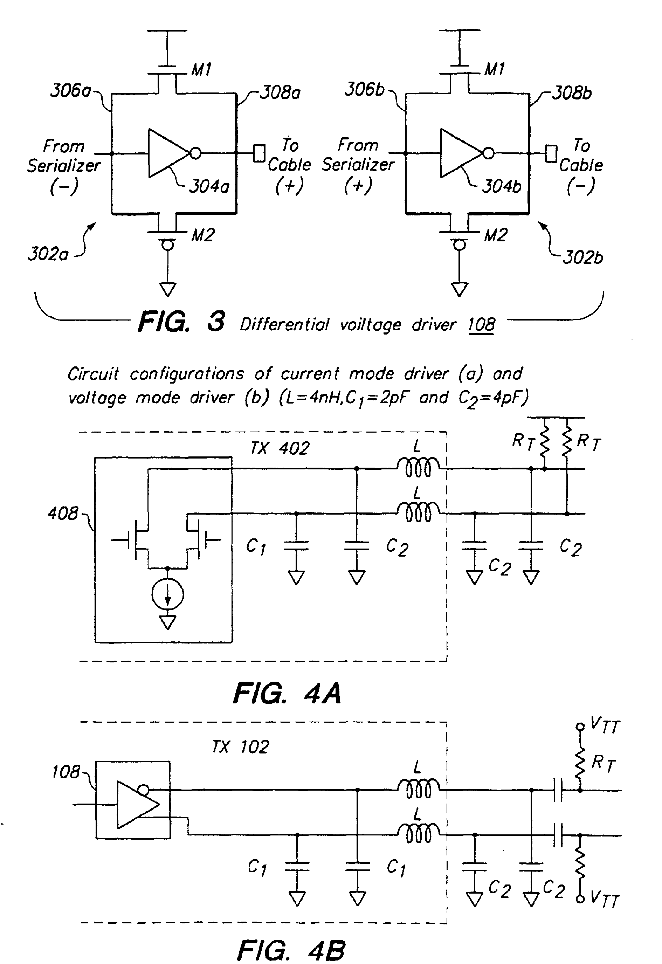

Fig. 3 shows a circuit diagram of a differential voltage driver 108 in accordance with a preferred embodiment of the present invention. The communication system 100 uses such a differential voltage driver 108 instead of a current mode driver, because a current mode driver is not appropriate to drive a high speed signal onto a transmission line in the presence of large parasitic capacitance and inductance due to bonding wires and pads. The differential voltage driver 108 comprises a first inverter circuit 302a and a second inverter circuit 302b.

The first inverter circuit 302a comprises a NMOS transistor M1, a PMOS transistor M2. and an inverter 304a. The NMOS transistor M1 has its gate coupled to a supply voltage, its drain coupled to a first node 306a, and its source coupled to a second node 308a. The PMOS transistor M2 has its gate coupled to an electrical ground, its drain coupled to the first node 306a, and its source coupled to the second node 308a. The inverter 304a has its input coupled to the first node 306a and its output coupled to the second node 308a. The first node 306a is also coupled to receive the negative polarity (-) output from the serializer 110. The second node 308a is also coupled to output a positive polarity (+) output to the transmission medium (for example, a cable). Thus, the circuitry of the first inverter circuit 302a operates to receive the negative polarity data signal from the serializer 110, invert the signal, and output a positive polarity data signal to the transmission medium. M1 and M2 are used as feedback resistors which reduce the voltage swing of the inverter 304a as well as reducing the output impedance.

The second inverter circuit 302b comprises a NMOS transistor M1, a PMOS transistor M2, and an inverter 304b. The NMOS transistor M1 has its gate coupled to a supply voltage, its drain coupled to a first node 306b, and its source coupled to a second node 308b. The PMOS transistor M2 has its gate coupled to an electrical ground, its drain coupled to the first node 306b, and its source coupled to the second node 308b. The inverter 304b has its input coupled to the first node 306b and its output coupled to the second node 308b. The first node 306b is also coupled to receive the positive polarity (+) output from the serializer 110. The second node 308b is also coupled to output a negative polarity (-) output to the transmission medium (for example, a cable). Thus, the circuitry of the second inverter circuit 302b operates to receive the positive polarity data signal from the serializer 110, invert the signal, and output a negative polarity data signal to the transmission medium. M1 and M2 are used as feedback resistors which reduce the voltage swing of the inverter 304b as well as reducing the output impedance.

Fig. 4 shows typical circuit configurations of (a) a current mode driver 408 and (b) a voltage mode driver 108. The voltage mode driver 108 would be in accordance with a preferred embodiment of the present invention.

In both cases, the driver (408 or 108) is coupled to a transmission medium via a connection typically including bonding and wire pads. The transmission medium and connection thereto are modeled by two capacitors $C_1$ and $C_2$ and an inductor L for each of two lines. $C_2$ represents the capacitance of each transmission line, and each of the capacitors $C_2$ is coupled between a transmission line and an electrical ground. Each LC circuit (comprising inductor L and capacitor $C_1$) represents the parasitic inductance and capacitance due to the bonding wires and pads. The other end of the transmission medium is coupled to a receiver via an appropriate connection (including termination). The appropriate connection varies depending upon whether the driver is a current mode driver 408 or a voltage mode driver 108.

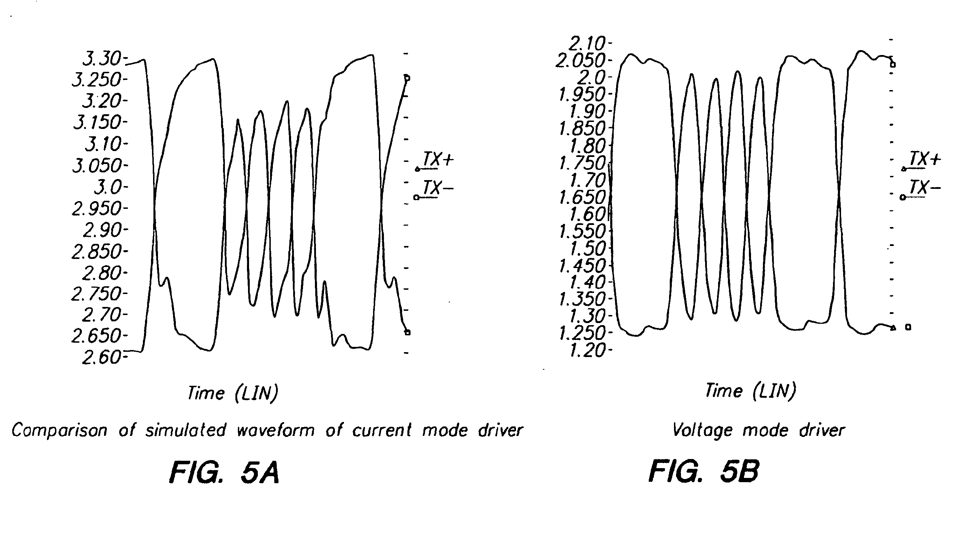

Fig. 5 shows simulated waveforms under the configurations shown in Fig. 4 in accordance with a preferred embodiment of the present invention. For purposes of the simulation, in order to model parasitic effects of the transmission medium and the connection thereto, the inductance L was set to be 4nH, and the two capacitors $C_1$ and $C_2$ were set to be 2pF and 4pF, respectively.

As shown in Fig. 5(a), significant inter-symbol interference occurs in the current mode driver 408 configuration. This inter-symbol interference may be attributed to slow, passive pull-up and constant current pull-down. In contrast, as shown in Fig. 5(b), only an insignificant amount of distortion occurs in the voltage mode driver 108 configuration. This is because the voltage mode driver 108 drives the signal actively in both directions (up and down).

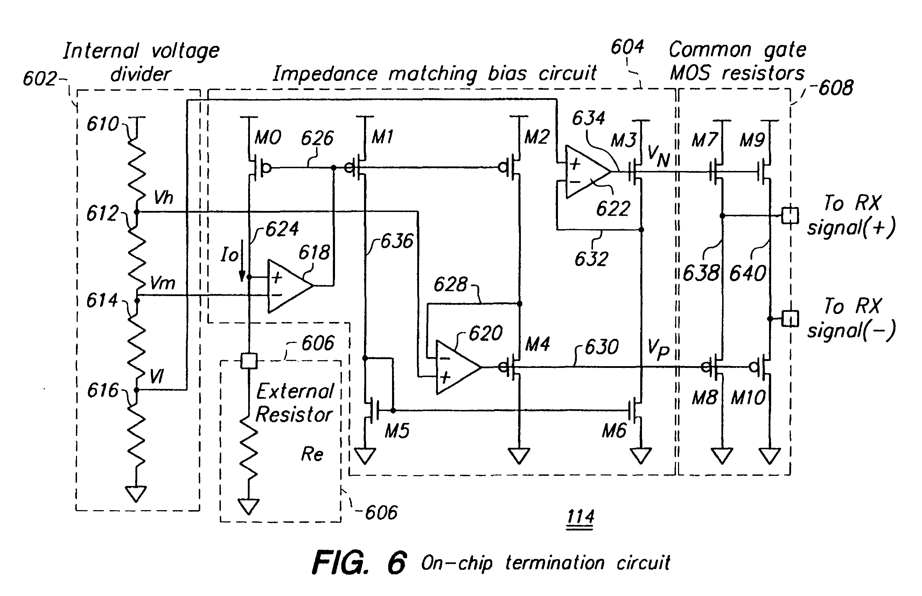

Fig. 6 shows a circuit diagram of an on-chip termination circuit 114 in accordance with a preferred embodiment of the present invention. As shown in Fig. 6, the on-chip termination circuit is based on a common gate CMOS configuration. In particular, the on-chip termination circuit 114 includes an internal voltage divider 602, an impedance matching bias circuit 604, an external resistor 606, and a configuration of common gate MOS transistors 608.

In accordance with a preferred embodiment, the internal voltage divider 602 includes four resistors (610, 612, 614, 616) and three nodes ($V_h$, $V_m$, and $V_l$). The four resistors are coupled in series between a supply voltage and an electrical ground. The three nodes exist between the four resistors. The first resistor 610 couples the supply voltage to the first node $V_h$. The second resistor 612 couples the first node $V_h$ to the second node $V_m$. The third resistor 614 couples the second node $V_m$ to the third node $V_l$. The fourth resistor 616 couples the third node $V_l$ to an electrical ground. The voltage at $V_h$ is relatively high, the voltage at $V_l$ is relatively low, and the voltage at $V_m$ is in between. Finally, each of the three nodes is coupled to the bias circuit 604. Thus, the internal voltage divider 602 generates three reference voltages.

In a preferred embodiment, the bias circuit 604 includes three operational amplifiers (opamps) 618, 620, and 622 and 7 transistors (M0-M6). The first opamp 618 has its negative terminal coupled to $V_m$ of the voltage divider 602, its positive terminal coupled to a first node 624, and its output terminal coupled to a second node 626. The second opamp 620 has its positive terminal coupled to of the voltage divider 602, its negative terminal coupled to a third node 628, and its output terminal coupled to a fourth node 630. The fourth node 630 is also labeled as voltage $V_P$. The third opamp 622 has its positive terminal coupled to $V_l$, its negative terminal coupled to a fifth node 632, and its output terminal coupled to a sixth node 634. The sixth node 634 is also labeled as voltage $V_N$.

The first transistor M0 comprises a PMOS transistor having its source coupled to a supply voltage, its drain coupled to the first node 624, and its gate coupled to the second node 626. The second transistor M1 comprises a PMOS transistor having its source coupled to a supply voltage, its drain coupled to a seventh node 636, and its gate coupled to the second node 626. The third transistor M2 comprises a PMOS transistor having its source coupled to a supply voltage, its drain coupled to the third node 628, and its gate coupled to the second node 626. Thus, each of the first three transistors M0-M2 comprise PMOS transistor having their gates controlled by the output of the first opamp 618.

The fourth transistor M3 comprises a NMOS transistor having its source coupled to a supply voltage, its drain coupled to the fifth node 632, and its gate coupled to the sixth node 634 ($V_N$). The fifth transistor M4 comprises a PMOS transistor having its source coupled to the third node 628, its drain coupled to an electrical ground, and its gate coupled to the fourth node 630 ($V_P$). The sixth transistor M5 comprises a NMOS transistor having its source and its gate both coupled to the seventh node 636, and its drain coupled to an electrical ground. Finally, the seventh transistor M6 comprises a NMOS transistor having its source coupled to the fifth node 632, its drain coupled to an electrical ground, and its gate coupled to the seventh node 636.

The external resistor 606 includes a resistor, denoted as having a resistance value of Re, coupled between the first node 624 of the bias circuit 604 and an electrical ground. The external resistor 606 is used as a reference impedance.

The common gate MOS transistors 608 include two NMOS transistors M7 and M9, and two PMOS transistors M8 and M10. The first NMOS transistor M7 has its source coupled to a supply voltage, its drain coupled to a first output node 638, and its gate coupled to the sixth node 634 of the bias circuit 604. The first PMOS transistor M8 has its source coupled to the first output node 638, its drain coupled to an electrical ground, and its gate coupled to the fourth node 630 of the bias circuit 604. The first output node 638 is coupled to the positive polarity line from the transmission medium for termination purposes. The second NMOS transistor M9 has its source coupled to a supply voltage, its drain coupled to a second output node 640, and its gate coupled to the sixth node 634 of the bias circuit 604. The second PMOS transistor M10 has its source coupled to the second output node 640, its drain coupled to an electrical ground, and its gate coupled to the fourth node 630 of the bias circuit 604. The second output node 640 is coupled to the negative polarity line of the transmission medium for termination purposes.

Operationally, the bias circuit 604 controls the termination voltage and impedance by providing bias voltages $V_P$ and $V_N$ to the gates of the common gate MOS transistors 608. Within the bias circuit 604, transistors M0, M1, M2, M5 and M6 are connected as current mirrors. All currents in the current mirrors are set as $V_m$/Re. Transistors M7 and M9 are replicas of M3. Transistors M8 and M10 are replicas of M4. M3 generates current Io at $V_l$. M4 generates current Io at $V_h$.

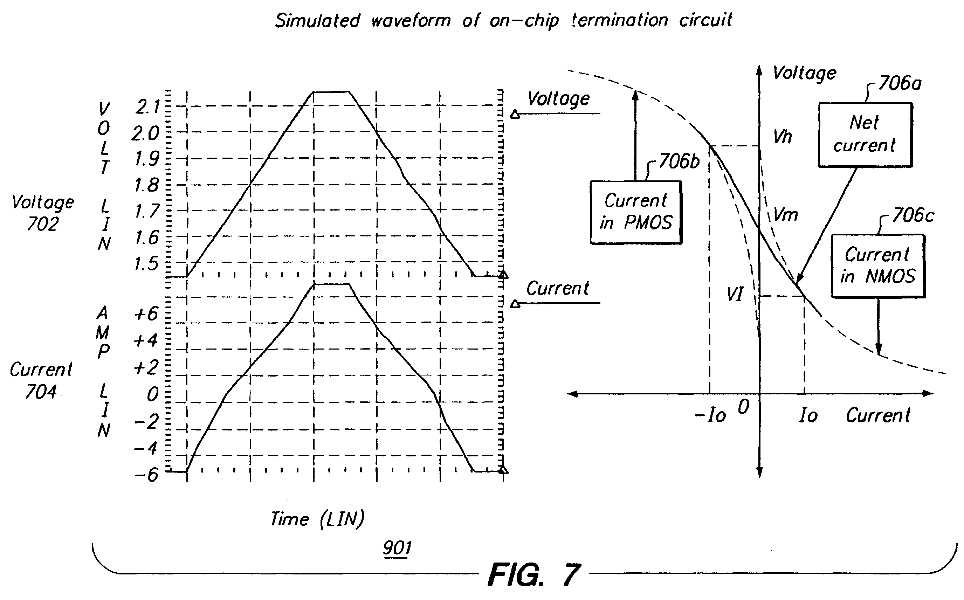

Fig. 7 shows the characteristics of the on-chip termination circuit 114 shown in Fig. 6 for a 75 ohm transmission line in accordance with a preferred embodiment of the present invention. Both voltage 702 and current 704 characteristics are shown. In addition, a voltage versus current graph 706 is also shown.

The voltage vs. current graph 706 shows net current 706a, PMOS transistor current 706b, and NMOS transistor current 706c. The graph 706 shows that although the impedance of either the PMOS transistor or the NMOS transistor is not linear, the combined effect of the PMOS and NMOS transistors is almost linear when the voltage is around Vdd/2. In particular, when the resistor values in the voltage divider are such that ($V_h$ - $V_m$) = ($V_m$ - $V_l$), then the relation between termination resistance $R_T$ and external resistance Re is as follows:

$$R_T = (V_h - V_m)/Io = Re \cdot (V_h - V_m)/V_m$$

The above equation shows that impedance is independent of supply voltage because both ($V_h$ - $V_m$) and $V_m$ are proportional to Vdd. There is a trade-off between power consumption and termination resistance range.

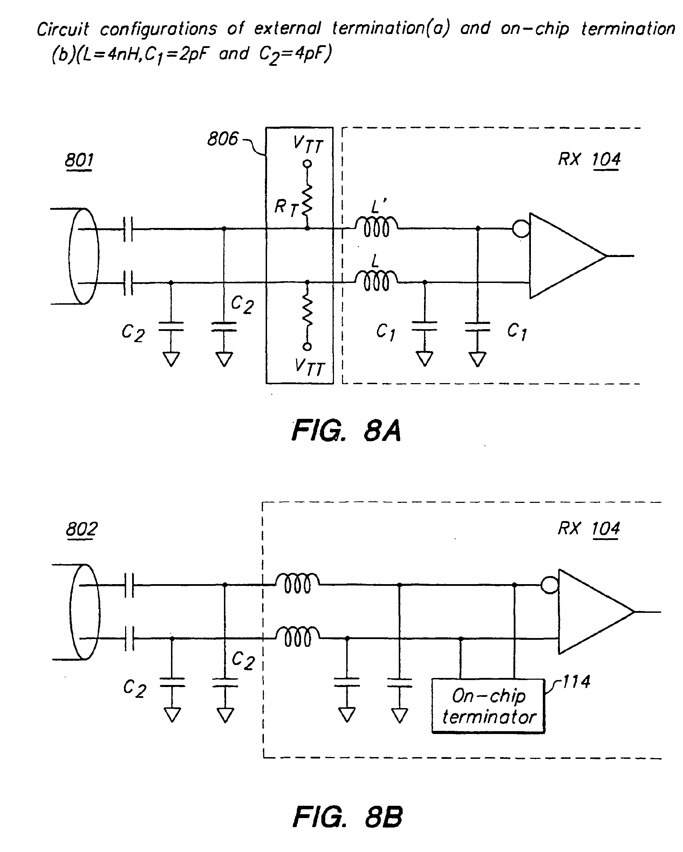

Fig. 8 contrasts (a) a conventional receiver configuration 801 using external termination 806 outside the conventional receiver 804 with (b) the receiver configuration 802 which utilizes on-chip termination 114 within the receiver 104 in accordance with a preferred embodiment of the present invention. As shown in Fig. 8, the conventional receiver configuration 801 has the external termination 806 placed in between the capacitance $C_2$ of the transmission medium and the LC circuit (L and C1) on the conventional receiver 804. In contrast, the receiver configuration 802 has the on-chip termination 114 between the LC circuit (L and C1) on the conventional receiver 804 and the rest of the conventional receiver 804.

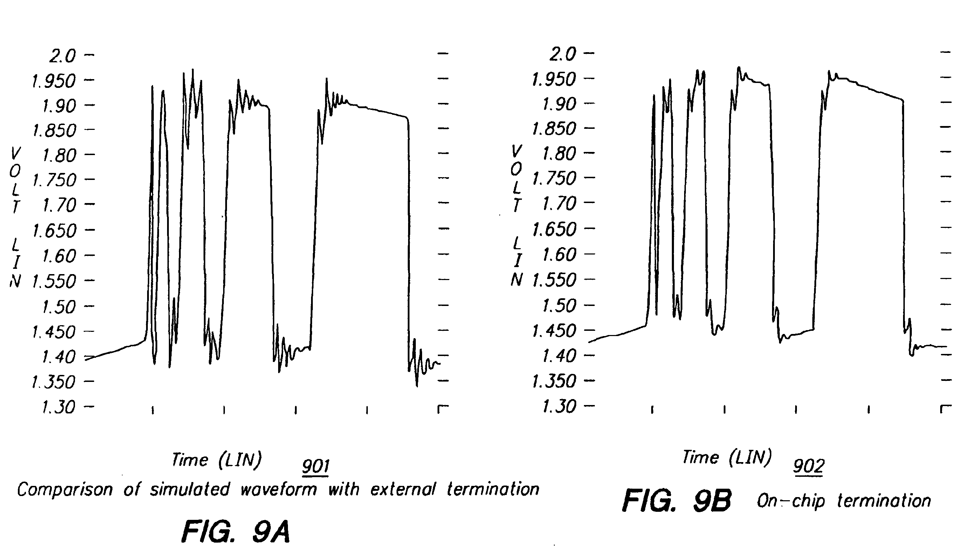

Fig. 9 contrasts (a) a first simulated waveform 901 in a receiver using external termination in accordance with Fig. 8(a) with (b) a second simulated waveform 902 in a receiver utilizing on-chip termination in accordance with Fig. 8(b). The simulations were run assuming the following values: L = 4 nH, $C_1$ = 2 pF, and $C_2$ = 4 pF. The simulations also assumed an ideal rectangular pulse train driven through a 75 ohm medium. As shown in Fig. 9, significantly reduced distortion can be seen in the second simulated waveform 902 in comparison to the first simulated waveform 901. Thus, using the on-chip termination 114 reduces distortion of the received signal.

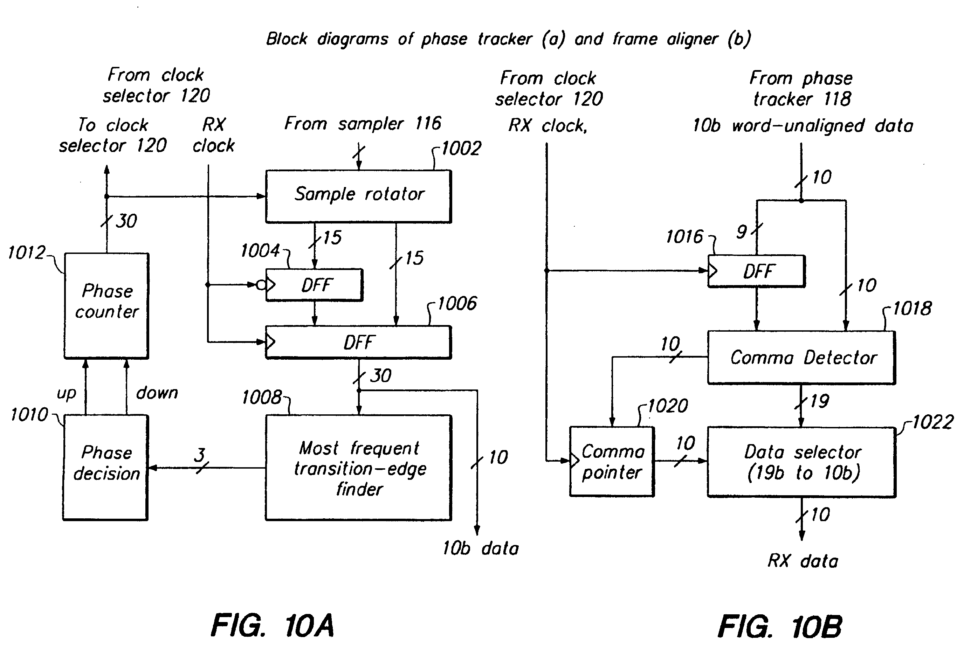

Fig. 10 shows a block diagram of (a) a phase tracker 118 and (b) a frame aligner 122 in accordance with a preferred embodiment of the present invention. In the preferred embodiment shown in Fig. 10(a), the phase tracker 118 includes a sample rotator 1002, a first D-type flip flop (DFF) array 1004, a second D-type flip flop (DFF) array 1006, a most frequent transition-edge finder 1008, a phase decision circuit 1010, and a phase counter 1012.

In a preferred embodiment, the rotator 1002 receives thirty samples in parallel from the sampler 116. The rotator 1002 applies a signal from the phase counter 1012 to shuffle the samples and to the timing of the samples into a RX clock domain. The rotated samples are provided by the rotator 1002 to the DFF arrays 1004 and 1006. Both the two DFF arrays 1004 and 1006 also receives the RX clock signal from the RX clock selector 120 for control purposes. In particular, the first 15 samples are provided to the first DFF array 1004, and the second 15 samples are provided to a second half of the second DFF array 1006. The first DFF array 1004 provides its contents to a first half of the second DFF array 1006. The second DFF array 1006 outputs 10 bits of data in parallel to the frame aligner 122, and also outputs its contents to the finder 1008.

In a preferred embodiment, the finder 1008 determines the most frequent transition-edge in the contents provided by the second DFF 1006. The most frequent edge information is passed from the finder to the phase decision circuit 1010. By continuously monitoring the most frequent transition-edge in the oversampled data, the phase of the RX clock keeps track of the sender's clock. In a preferred embodiment, the phase decision circuit 1010 uses the most frequent transition-edge information to determine whether an up signal or a down signal should be sent to the phase counter 1012. The phase counter 10 12 applies any up or down signal received from the phase decision circuit 1010 and provides a 10-bit phase pointer to the rotator 1002 and to the clock selector 120. The phase pointer indicates which clock among the 30 PLL clocks is closest to the clock of the transmitter 102.

In the preferred embodiment shown in Fig. 10 (b), the frame aligner 122 includes a D-type flip flop (DFF) array 1016, a comma detector 1018, a comma pointer 1020, and a data selector 1022. The DFF array 1016 stores the previous 9 bits of word-unaligned data from the phase tracker 118 and provides them to a comma detector 1018. The comma detector 1018 also receives the current 10 bits of word-unaligned data from the phase tracker 118. The comma detector 1018 searches across the 19 bit data sequence to detect any comma which would comprise the sequence of bits 0011111010. The detected position of a comma is stored using a comma pointer 1020. The comma pointer 1020 is used by the data selector 1022 to extract the word aligned 10 bits of data until a new comma is detected.

## Claims

1. A system (100) for high speed communication of digital data comprising: a transmission medium including a first end and a second end; a transmitter (102) coupled to the first end of the transmission medium for converting the digital data to a serial data signal and for driving the serial data signal onto the transmission medium, the transmitter including a complementary metal-oxide-semiconductor, CMOS, driver (108;408); and a receiver (104) coupled to the second end of the transmission medium for receiving the serial data signal from the transmission medium and for recovering the digital data from the serial data signal, the receiver (104) including on-chip termination for substantially reducing 04) distortion in the serial data signal, wherein the CMOS driver (108; 408) is adapted to drive the serial data signal onto the transmission medium at least at gigabaud speed.

2. The system of claim 1, wherein the transmitter further includes a high speed serializer (110).

3. The system of claims 1 or 2, wherein the CMOS driver comprises a differential voltage driver (108).

4. The system of one of the preceding claims, further comprising: a phase-locked loop (106) coupled to the transmitter (102) and to the receiver (104), the phase-locked loop (106) receiving a clock signal from the transmitter (102), generating a plurality of clock signals with different phases based on the clock signal, and providing the plurality of clock signals with different phases to the receiver (104).

5. The system of claim 4, wherein the phase-locked loop (106) further provides a subset of the plurality of clock signals with different phases to the transmitter (102).

6. The system of claim 5, wherein the receiver (104) further includes an oversampler (116) for receiving the plurality of clock signals with different phases and applying the plurality of clock signals with different phases to oversample the serial data signal and so generate an oversampled data signal.

7. The system of claim 6, wherein the receiver (104) further includes phase tracking circuitry (118) for receiving the oversampled data signal and for monitoring a most frequent transition edge in the oversampled data in order to keep track of the clock signal from the transmitter (102).

8. A transmitter (102) for converting digital data to a serial data signal and for driving the serial data signal onto a communication medium, the transmitter (102) comprising: a CMOS driver (108) adapted to drive the serial data signal onto the transmission medium at least at gigabaud speed.

9. The transmitter of claim 8, where the transmitter (102) further includes a high speed serializer (110).

10. The transmitter of claim 8 or 9, where the CMOS driver comprises a differential voltage driver (108).

11. A receiver (104) for receiving a serial data signal from a transmission medium at least at gigabaud speed and for recovering digital data from the serial data signal, the receiver (104) comprising: on-chip termination (114) for substantially reducing distortion in the serial data signal, whereby the receiver is adapted to receive the serial data signal driven onto the transmission medium by the transmitter of one of claims 8 to 10.

12. The receiver of claim 11, further comprising: an oversampler (116) for applying a plurality of clock signals with different phases to oversample the serial data signal and so generate an oversampled data signal.

13. The receiver of claim 12, wherein the receiver (104) further includes phase tracking circuitry (118) for monitoring a most frequent transition edge in the oversampled data in order to keep track of a clock signal from the transmitter (102) which drove the serial data signal onto the transmission medium.

14. The receiver of one of claims 11-13, further comprising: a comma detector (1018) for finding comma characters in the serial data signal for purposes of data word synchronization.


**Patentansprüche**

1. System (100) zur Hochgeschwindigkeitsübertragung digitaler Daten, umfassend: ein Übertragungsmedium mit einem ersten Ende und einem zweiten Ende; einen Sender (102), der mit dem ersten Ende des Übertragungsmediums verbunden ist, um die digitalen Daten in ein serielles Datensignal umzuwandeln und um das serielle Datensignal an das Übertragungsmedium anzulegen, wobei der Sender eine CMOS-Ansteuereinheit (108; 408) umfaßt; und einen Empfänger (104), der mit dem zweiten Ende des Übertragungsmediums verbunden ist, um das serielle Datensignal von dem Übertragungsmedium zu empfangen und um die digitalen Daten aus dem seriellen Datensignal wiederherzustellen, wobei der Empfänger (104) einen chipseitigen Abschluß umfaßt, um Störungen innerhalb des seriellen Datensignals weitgehend zu verringern, wobei die CMOS-Ansteuereinheit (108; 408) eingerichtet ist, das serielle Datensignal mit mindestens Gigabaud-Geschwindigkeit an das Übertragungsmedium anzulegen.

2. System nach Anspruch 1, wobei der Sender ferner einen Hochgeschwindigkeits-Parallel/Seriell-Umwandler (110) umfaßt.

3. System nach Anspruch 1 oder 2, wobei die CMOS-Ansteuereinheit eine Differenz-Spannungsansteuereinheit (108) umfaßt.

4. System nach einem der vorangegangenen Ansprüche, das ferner umfaßt: einen Phasenregelkreis (106), der mit dem Sender (102) und dem Empfänger (104) verbunden ist, wobei der Phasenregelkreis (106) ein Taktsignal von dem Sender (102) empfängt, eine Vielzahl von Taktsignalen mit verschiedenen Phasen basierend auf dem Taktsignal erzeugt und den Empfänger (104) mit der Vielzahl von Taktsignalen, die verschiedene Phasen aufweisen, versorgt.

5. System nach Anspruch 4, wobei der Phasenregelkreis (106) den Sender (102) mit einer Untermenge der Vielzahl von Taktsignalen, die verschiedene Phasen aufweisen, versorgt.

6. System nach Anspruch 5, wobei der Empfänger (104) ferner einen Überabtaster (116) umfaßt, um die Vielzahl von Taktsignalen, die verschiedene Phasen aufweisen, zu empfangen, und um die Vielzahl von Taktsignalen, die verschiedene Phasen aufweisen, an dem Überabtaster (116) anzulegen, um das serielle Datensignal überabzutasten, um **dadurch** ein überabgetastetes Datensignal zu erzeugen.

7. System nach Anspruch 6, wobei der Empfänger (104) eine Phasenverfolgungsschaltung (118) umfaßt, um das überabgetastete Datensignal zu empfangen und um eine häufigste Übergangsflanke in den überabgetasteten Daten zu überwachen, um das von dem Sender (102) stammende Taktsignal zu verfolgen.

8. Sender (102) zum Umwandeln digitaler Daten in ein serielles Datensignal und zum Anlegen des seriellen Datensignals an ein Kommunikationsmedium, wobei der Sender (102) umfaßt: eine CMOS-Ansteuereinheit (108), die eingerichtet ist, das serielle Datensignal an das Übertragungsmedium bei mindestens Gigabaud-Geschwindigkeit anzulegen.

9. Sender nach Anspruch 8, wobei der Sender (102) ferner einen Hochgeschwindigkeits-Seriell/Parallel-Umwandler (110) umfaßt.

10. Sender nach Anspruch 8 oder 9, wobei die CMOS-Ansteuereinheit eine Differenz-Spannungsansteuereinheit (108) umfaßt.

11. Empfänger (104) zum Empfangen eines seriellen Datensignals von einem Übertragungsmedium bei mindestens Gigabaud-Geschwindigkeit und zum Wiederherstellen digitaler Daten aus dem seriellen Datensignal, wobei der Empfänger (104) umfaßt: einen chipseitigen Abschluß (114), um eine Störung innerhalb des seriellen Datensignals weitgehend zu verringern, wobei der Empfänger eingerichtet ist, das serielle Datensignal zu empfangen, welches von dem Sender nach einem der Ansprüche 8 bis 10 an das Übertragungsmedium angelegt wurde.

12. Empfänger nach Anspruch 11, der ferner umfaßt: einen Überabtaster (116), um an diesen eine Vielzahl von Taktsignalen, die verschiedenen Phasen aufweisen, anzulegen, um das serielle Datensignal überabzutasten und **dadurch** ein überabgetastetes Datensignal zu erzeugen.

**13.** Empfänger nach Anspruch 12, wobei der Empfänger (104) ferner eine Phasenverfolgungsschaltung (118) umfaßt, um die häufigste Übergangsflanke innerhalb der überabgetasteten Daten zu überwachen, um ein von dem Sender (102) stammendes Datensignal zu verfolgen, mit dem das serielle Datensignal an das Übertragungsmedium angelegt wurde.

**14.** Empfänger nach einem der Ansprüche 11 bis 13, ferner umfassend: einen Kommadetektor (1018) zum Auffinden von Kommazeichen in dem seriellen Datensignal zum Zwecke der Datenwort-Synchronisierung.

**Revendications**

**1.** Système (100) pour établir une communication à grande vitesse de données numériques, comprenant: un moyen de transmission présentant une première extrémité et une deuxième extrémité; un transmetteur (102) couplé à la première extrémité du moyen de transmission pour convertir les données numériques en un signal de données en série et pour exciter le signal de données en série sur le moyen de transmission, le transmetteur comprenant un excitateur à semi-conducteur par oxyde métallique complémentaire (CMOS) (108; 408); et un récepteur (104) couplé à la deuxième extrémité du moyen de transmission pour recevoir le signal de données en série envoyé par le moyen de transmission et pour récupérer les données numériques provenant du signal de données en série, le récepteur (104) comprenant une terminaison incorporée pour réduire sensiblement la distorsion dans le signal de données en série, dans lequel l'excitateur CMOS (108; 408) est adapté pour exciter le signal de données en série sur le moyen de transmission à une vitesse au moins de l'ordre du gigabaud.

**2.** Système selon la revendication 1, dans lequel le transmetteur comprend en outre un convertisseur parallèle-série à grande vitesse (110).

**3.** Système selon la revendication 1 ou 2, dans lequel l'excitateur de CMOS comprend un excitateur à tension différentielle (108).

**4.** Système selon l'une quelconque des revendications précédentes, comprenant en outre une boucle à verrouillage de phase (106) couplée au transmetteur (102) et au récepteur (104), la boucle à verrouillage de phase (106) recevant un signal d'horloge en provenance du transmetteur (102), générant une pluralité de signaux d'horloge présentant des phases différentes basées sur le signal d'horloge, et transmettant au récepteur (104) la pluralité de signaux d'horloge présentant des phases différentes.

**5.** Système selon la revendication 4, dans lequel la boucle à verrouillage de phase (106) fournit en outre au transmetteur (102) un sous-ensemble de la pluralité de signaux d'horloge présentant des phases différentes.

**6.** Système selon la revendication 5, dans lequel le récepteur (104) comprend en outre un sur-échantillonneur (116) pour recevoir la pluralité de signaux d'horloge présentant des phases différentes et pour appliquer la pluralité de signaux d'horloge présentant des phases différentes pour sur-échantillonner le signal de données en série et générer ainsi un signal de données sur-échantillonné.

**7.** Système selon la revendication 6, dans lequel le récepteur (104) comprend en outre un circuit de pistage de phase (118) pour recevoir le signal de données sur-échantillonné et pour surveiller un bord de transition plus fréquent dans les données sur-échantillonnées en vue de garder la piste du signal d'horloge émis par le transmetteur (102).

**8.** Transmetteur (102) pour convertir des données numériques en un signal de données en série et pour exciter le signal de données en série sur un moyen de communication, le transmetteur (102) comprenant un excitateur CMOS (108) adapté pour exciter le signal de données en série sur le moyen de transmission à une vitesse au moins de l'ordre du gigabaud.

**9.** Transmetteur selon la revendication 8, dans lequel le transmetteur (102) comprend en outre un convertisseur parallèle-série à grande vitesse (110).

**10.** Transmetteur selon la revendication 8 ou 9 dans lequel l'excitateur de CMOS comprend un excitateur à tension différentielle (108).

**11.** Récepteur (104) pour recevoir un signal de données en série envoyé par un moyen de transmission à une vitesse au moins de l'ordre du gigabaud, et pour récupérer des données numériques dans le signal de données en série, le récepteur (104) comprenant une terminaison incorporée (114) pour réduire sensiblement la distorsion dans le signal de données en série, le récepteur étant ainsi adapté pour recevoir le signal de données en série excité sur le moyen de transmission par le transmetteur selon l'une des revendications 8 à 10.

**12.** Récepteur selon la revendication 11, comprenant en outre un sur-échantillonneur (116) pour appliquer la pluralité de signaux d'horloge présentant des phases différentes pour sur-échantillonner le signal de données en série et générer ainsi un signal de données sur-échantillonné.

13. Récepteur selon la revendication 12, dans lequel le récepteur (104) comprend en outre un circuit de pistage de phase (118) pour surveiller un bord de transition plus fréquent dans les données sur-échantillonnées en vue de garder la piste d'un signal d'horloge délivré par le transmetteur (102) qui a excité le signal de données en série sur le moyen de transmission.

14. Récepteur selon l'une des revendications 11 à 13, comprenant en outre un détecteur de virgule (1018) pour trouver des caractères de virgule dans le signal de données en série dans un but de synchronisation des mots de données.

**FIG. 1** Block diagram of overall system 100

EP 1 050 138 B1

**FIG. 2** Pseudo-NMOS differential 10-bit serializer

EP 1 050 138 B1

**FIG. 3** Differential voltage driver <u>108</u>

Circuit configurations of current mode driver (a) and voltage mode driver (b) (L=4nH,$C_1$=2pF and $C_2$=4pF)

**FIG. 4A**

**FIG. 4B**

TX+
TX−

Time (LIN)

Voltage mode driver

**FIG. 5B**

Comparison of simulated waveform of current mode driver

TX+
TX−

Time (LIN)

**FIG. 5A**

**FIG. 6** On-chip termination circuit

Internal voltage divider

Impedance matching bias circuit

604 Common gate MOS resistors

602

610
612 Vh
614 Vm
616 Vl

618
624
Io

606
External Resistor
Re

626 M0
M1
636
628
620
M5
M4
630

M2
634
622
632

638 M7
640 M9

To RX signal(+)

To RX signal(−)

M3 VN

VP

M6

M8 M10

114

608

EP 1 050 138 B1

Simulated waveform of on-chip termination circuit

Voltage

706a — Net current

706c — Current in NMOS

Vh

Vm

Io Current

VI

−Io 0

706b — Current in PMOS

Voltage

Current

Voltage 702

| V O L T | 2.1 2.0 1.9 1.8 | L I N | 1.7 1.6 1.5 |

Current 704

| A M P | +6 +4 +2 | L I N | 0 −2 −4 −6 |

Time (LIN)
901

FIG. 7

*Circuit configurations of external termination(a) and on-chip termination (b)(L=4nH,$C_1$=2pF and $C_2$=4pF)*

**FIG. 8A**

**FIG. 8B**

Time (LIN) 901

Comparison of simulated waveform with external termination

**FIG. 9A**

Time (LIN) 902

**FIG. 9B** On-chip termination

EP 1 050 138 B1

Block diagrams of phase tracker (a) and frame aligner (b)

From clock
selector 120

To clock          RX
selector 120       clock          From sampler 116

┌─────────────────┐
│  Sample rotator │ 1002
└─────────────────┘

1004 ┌─────┐ /15        /15
     │ DFF │
     └─────┘

1012 ┌─────────┐            ┌──────────────┐ 1006
     │  Phase  │  /30       │     DFF      │
     │ counter │            └──────────────┘
     └─────────┘                   /30

  up    down

1010 ┌──────────┐   3    ┌────────────────────┐ 1008
     │  Phase   │ ←───── │   Most frequent    │
     │ decision │        │  transition-edge   │  /10
     └──────────┘        │      finder        │
                         └────────────────────┘
                                              10b data

**FIG. 10A**

From clock
selector 120           From phase
RX clock,              tracker 118
                       10b word-unaligned data

                              /10

1016 ┌─────┐  9/
     │ DFF │
     └─────┘
              /10                      /10
                         ┌──────────────────┐ 1018
           10/           │  Comma Detector  │
     ┌───────────┐ 1020  └──────────────────┘
     │   Comma   │              /19
     │  pointer  │ 10/   ┌──────────────────┐ 1022
     └───────────┘       │  Data selector   │
                         │   (19b to 10b)   │
                         └──────────────────┘
                                /10
                              RX data

**FIG. 10B**

EP 1 050 138 B1